(19) 

Europäisches
Patentamt
European
Patent Office
Office européen
des brevets

(11) **EP 3 702 642 A1**

(12) **EUROPEAN PATENT APPLICATION**
published in accordance with Art. 153(4) EPC

(43) Date of publication:
**02.09.2020 Bulletin 2020/36**

(21) Application number: **17922908.3**

(22) Date of filing: **07.09.2017**

(51) Int Cl.:
**F16H 1/32** (2006.01)    **F16C 33/58** (2006.01)

(86) International application number:
**PCT/JP2017/032380**

(87) International publication number:
**WO 2019/049295 (14.03.2019 Gazette 2019/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Harmonic Drive Systems Inc.**
**Shinagawa-ku**
**Tokyo 140-0013 (JP)**

(72) Inventors:
• **ZHANG, Xin Yue**
  **Azumino-shi**
  **Nagano 399-8305 (JP)**
• **KIYOSAWA, Yoshihide**
  **Azumino-shi**
  **Nagano 399-8305 (JP)**

(74) Representative: **TBK**
**Bavariaring 4-6**
**80336 München (DE)**

(54) **WAVE GENERATOR AND WAVE GEAR DEVICE**

(57)    A strain wave gearing (1) has a wave generator (4) provided with a rigid plug (5) and a wave bearing (7). The wave bearing (7) is of a deep groove bearing type and is mounted on an elliptical outer circumferential surface of the rigid plug (5), whereby outer race (9) and inner race (8) thereof are flexed into an elliptical shape. Where D is a ball diameter of the balls (10), Ro is a raceway-surface radius of the outer race, Ri is a raceway-surface radius of the inner race, Ro/D is an outer-race conformity, and Ri/D is an inner-race conformity, the outer-race conformity Ro/D is greater than the inner-race conformity Ri/D. The friction torque of the wave bearing (7) can be reduced while maintaining the practical service life thereof to be the same level as in a conventional one.

FIG. 3

**Description**

TECHNICAL FIELD

The present invention relates to a wave generator of a strain wave gearing, and more particularly relates to a wave generator provided with a wave bearing having a small friction torque.

BACKGROUND ART

A strain wave gearing is provided with a rigid internally toothed gear, a flexible externally toothed gear and a wave generator. The externally toothed gear is flexed radially by the wave generator and is partially meshed with the internally toothed gear. Rotation of the wave generator causes the meshing positions between the both gears to move in a circumferential direction, whereby relative rotation between the gears is generated due to the difference in the number of teeth therebetween.

A wave generator is commonly provided with a rigid plug having an elliptical contour and a deep-groove-bearing type wave bearing mounted on the outer circumferential surface of the rigid plug. The wave bearing, which is flexed elliptically by the rigid plug, is provided with outer and inner races that are flexible in a radial direction and a plurality of balls mounted between these races in a rollable state. The wave bearing is fitted inside the externally toothed gear to hold the externally toothed gear and the rigid plug in a state in which the gear and the plug can rotate relative to each other. Strain wave gearings can be divided into three types: flat type, cup type and top-hat types, according to the shape of the flexible externally toothed gear. These types of strain wave gearing are disclosed in Patent documents 1, 2 and 3.

In an example of a strain wave gearing, the wave generator is set to be a rotation input element, and an internally toothed gear or an externally toothed gear is set to be a reduced-speed rotation output element. The rigid plug rotates while radially deforming the respective parts of the wave bearing and the externally toothed gear. The inner race of the wave bearing rotates together with the rigid plug at a high speed, while the outer race thereof rotates together with the externally toothed gear. The balls, which are inserted between the inner and outer races, roll along the raceway surfaces of the inner and outer races. The wave bearing allows the rigid plug and the externally toothed gear to smoothly rotate relative to each other.

In a conventional wave bearing, the outer-race raceway surface and the inner-race raceway surface are set to be a concave surface having the same radius of curvature. The present inventors et al have made a proposal in Patent document 4 to attain an extended service life of the wave bearing of a strain wave gearing, in which the wave bearing rotates while being repeatedly flexed in the radial direction. In this proposal, the ball diameter of the wave bearing is set to dimensions 5 to 15% greater in relation to the dimensions of each model of the currently available product, and the ratio (inner-race conformity) of the inner-race raceway-surface radius and the ball diameter and that (outer-race conformity) of the outer-race raceway-surface radius and the ball diameter are both set 0.8 to 2% less than those ratios in each model of the currently available product.

PRIOR ART DOCUMENTS

PATENT DOCUMENTS

Patent document 1: JP 05-172195 A
Patent document 2: JP 08-166052 A
Patent document 3: JU 02-91238 A
Patent document 4: JP 2010-164068 A

SUMMARY OF THE INVENTION

PROBLEMS TO BE SOLVED BY THE INVENTION

There are cases in which it is desirable to reduce the friction torque of the wave bearing in order to improve the performance of a strain wave gearing such as reduction in starting toque thereof. In view of this point, an object of the present invention is to provide a wave generator provided with a wave bearing having a low friction torque.

MEANS OF SOLVING THE PROBLEMS

In the wave bearing of a currently available product, in which the balls inserted between the inner and outer races roll while the inner and outer races are repeatedly flexed in the radial direction, the outer race has a much longer theoretical service life than the inner race. The present inventors have paid attention to this fact and make the outer-race conformity large to reduce the friction torque of the wave bearing.

Specifically, according to the present invention, there is provided a wave generator of a strain wave gearing configured so that the wave generator flexes a flexible externally toothed gear into an elliptical shape to partially mesh with an internally toothed gear and moves meshing positions between the both gears in a circumferential direction, the wave generator having:

a rigid lug and a wave bearing,
wherein the wave bearing is provided with an annular outer race that is flexible in a radial direction thereof, an annular inner race that is flexible in a radial direction thereof, and a plurality of balls inserted between the outer race and the inner race;
the wave bearing is mounted on an elliptical outer circumferential surface of the rigid plug to flex the outer race and the inner race into an elliptical shape; and
where D is a ball diameter of the balls, Ro is a raceway-surface radius of the outer race, Ri is a raceway-surface radius of the inner race, Ro/D is an outer-race conformity, and Ri/D is an inner-race conformity,
the outer-race conformity Ro/D is greater than the inner-race conformity Ri/D.

In the present invention, the raceway-surface radius (radius of curvature) Ro of the outer-race raceway surface is greater than the raceway-surface radius (radius of curvature) Ri of the inner-race raceway surface. In comparison with a case in which the raceway-surface radius of the outer-race raceway surface is the same as that of the inner-race raceway surface (in other words, when the outer-race conformity is the same as the inner-race conformity), the balls become easier to make relative motion with respect to the outer-race raceway surface, whereby reducing friction force generated between the balls and the outer-race raceway surface. As a result, it is possible to obtain a wave bearing having a low friction torque as a whole. Here, when the outer-race conformity is made large, the theoretical service life of the outer race becomes short. When the outer-race conformity is the same as the inner-race conformity as in the conventional case, the theoretical service life of the outer race is longer than that of the inner race. It is possible to reduce the friction torque of the wave bearing while maintaining the practical service life thereof to be the same level as in the conventional case by setting the outer-race conformity in an appropriate manner.

There is a case in which the inner race of the wave bearing is integrated in the elliptical outer circumferential surface of the rigid plug and an inner-race raceway surface is formed on the elliptical outer circumferential surface. The present invention can also be applied to such a case as this.

In a conventional wave bearing, the outer-race conformity is in a range from 51.1% to 52.3% and the inner-race conformity is 51.5% to 52.5%. In this case, the theoretical service life of the outer race is longer than that of the inner race as indicated by the following formula.

$$\text{L}_{10 \text{ outer race}} \ / \ \text{L}_{10 \text{ inner race}} \fallingdotseq 2.5 \text{ to } 3.1$$

In the present invention, when the inner-race conformity is in a range from 51.1% to 52.3% as in a conventional case, the outer-race conformity is desirably set to be in a range from 52.6% to 58.1%. By doing so, the theoretical outer-race service life becomes close to be the theoretical inner-race service life or even to be the same as that, and it is therefore possible to reduce the friction torque of the wave bearing while maintaining the practical service life thereof as the same level as of a conventional case.

BRIEF DESCRIPTION OF THE DRAWINGS

FIG. 1 is a schematic longitudinal cross-sectional view of a cup-type strain wave gearing according to the present invention;
FIG. 2 is an explanatory view illustrating a meshing state between an externally toothed gear and an internally toothed gear of the strain wave gearing of FIG. 1;
FIG. 3 is a front view illustrating a wave generator of FIG. 1;

FIG. 4 is a partial cross-sectional view illustrating a wave bearing of the wave generator of FIG. 1; and
FIG. 5 includes schematic views illustrating a flat-type strain wave gearing according to the present invention.

## MODE FOR CARRYING OUT THE INVENTION

An embodiment of a strain wave gearing according to the present invention will be described hereinbelow with reference to the drawings. The present invention is applied to a cup type strain wave gearing in the following embodiment. The present invention can also be applied to a wave generator of a top-hat type or a flat type strain wave gearing in a similar manner.

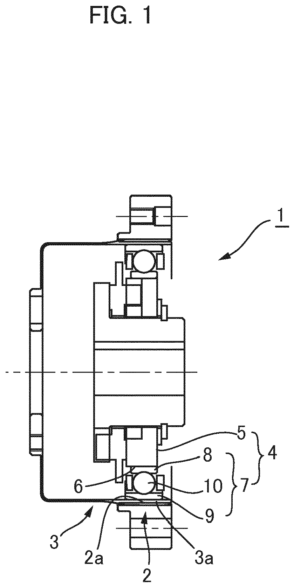

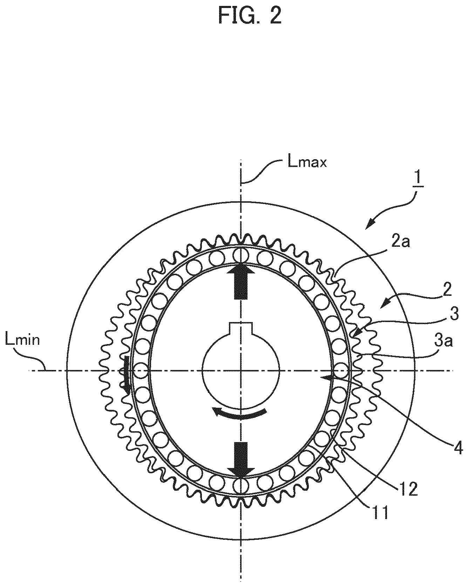

FIG. 1 is a schematic longitudinal cross-sectional view of a cup-type strain wave gearing according to the present embodiment, and FIG. 2 is an explanatory view illustrating a meshing state in the strain wave gearing. A strain wave gearing 1 has a rigid internally toothed gear 2, a cup-shaped flexible externally toothed gear 3 disposed inside the internally toothed gear, and a wave generator 4 that has an elliptical contour and is fitted into the externally toothed gear. The externally toothed gear 3 has a cylindrical portion where external teeth 3a are formed, the cylindrical portion being flexed elliptically by the wave generator 4. The portions of the external teeth 3a located on the both ends of the major axis Lmax of the elliptical shape are meshed with internal teeth 2a of the annular internally toothed gear 2.

The wave generator 4 is linked to a motor shaft or other high-speed rotation input shaft. When the wave generator 4 rotates, the meshing positions of the both gears 2 and 3 move in the circumferential direction, whereby a relative rotation between the both gears 2 and 3 is generated due to the difference in the number of teeth therebetween. For example, the internally toothed gear 2 is fixed not to rotate and the externally toothed gear 3 is linked to a member on the load side. A reduced-speed rotation is taken out from the externally toothed gear 3 and is transmitted to the member of the load side.

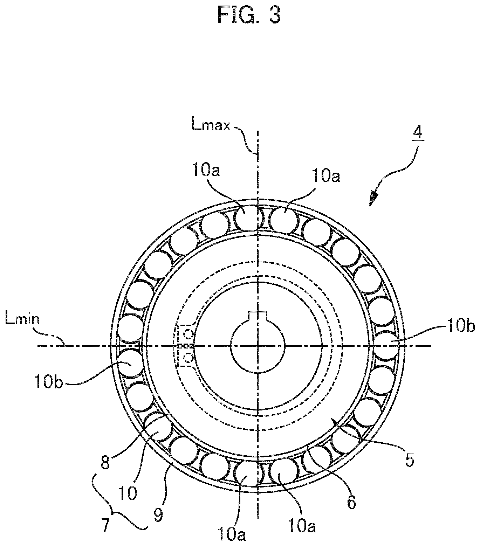

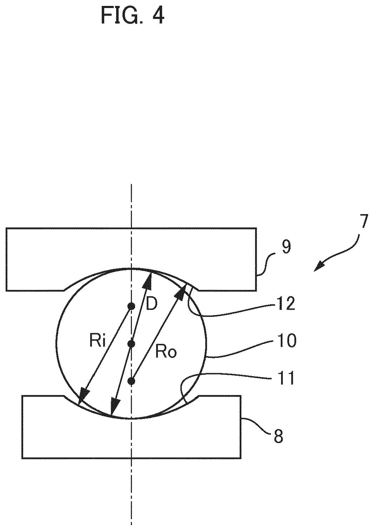

FIG. 3 is a front view illustrating the wave generator 4 and FIG. 4 is a partial cross-sectional view illustrating a wave bearing thereof. Explanation will be made with reference to these drawings. The wave generator 4 is provided with a rigid plug 5 and a wave bearing 7 mounted on an elliptical outer circumferential surface 6 thereof. The rigid plug 5 is fixed to an outer circumferential surface of a hub lined to a rotation input shaft (not shown). The wave bearing 7 is provided with a circular inner race 8 that is flexible in the radial direction, a circular outer race 9 that is flexible in the radial direction, and a plurality of balls 10 that are mounted between the races in a rollable state.

The wave bearing 7 is flexed into an elliptical shape by the rigid plug 5 and, in this state, is fitted into the externally toothed gear 3, whereby maintaining a state in which the externally toothed gear 3 is rotatable relative to the rigid plug 5 lined to a high-speed rotation input shaft. The inner race 8 is formed on the outer circumferential surface with an inner-race raceway surface 11 and the outer race 9 is formed on the inner circumferential surface with an outer-race raceway surface 12. The balls 10, which are inserted between the elliptically flexed inner and outer races 8 and 9, perform a rolling motion along the inner-race raceway surface 11 and the outer-race raceway surface 12, so that the rigid plug 5 and the externally toothed gear 3 can smoothly rotate to each other with a small torque.

More specifically, the wave bearing 7 is flexed into an elliptical shape by the rigid plug 5. Where Lmax is the major axis of the elliptical shape and Lmin is the minor axis thereof, one or a plurality of balls 10 located on both ends of the major axis Lmax are a tight ball 10a. The tight ball 10a performs a rolling motion while being maintained in a tight state. In the tight state, the ball is sandwiched with a certain pressing force between the inner-race raceway surface 11 and the outer-race raceway surface 12 and is in a point contact with the inner-race raceway surface 11 and the outer-race raceway surface 12. The remining balls 10, which are located on the portions other than the both ends of the major axis Lmax, are a loose ball 10b. The loose ball 10b is in a loose state in which a gap is formed at least between the loose ball and the inner-race raceway surface 11 or between the loose ball and the outer-race raceway surface 12 so as to perform a free rolling motion.

As illustrated in FIG. 4, the wave bearing 7 has a basic structure that is the same as in a conventional wave bearing of a deep-groove-bearing type. The wave bearing 7 is provided with the outer race 9, the conformity of which (a ratio of the outer-race raceway-surface radius and the ball diameter) differs from the conventional product.

Here, D is a ball diameter, Ri is a raceway-surface radius of the inner-race raceway surface 11, and Ro is a raceway-surface radius of the outer-race raceway surface 12. The ratio Ri/D of the inner-race raceway-surface radius Ri and the ball diameter D is called as an inner-race conformity, and the ratio Ro/D of the outer-race raceway-surface radius Ro and the ball diameter D is called as an outer-race conformity. The outer-race conformity Ro/D is greater than the inner-race conformity Ri/D. In this example, these parameters are set as in Table 1.

[Table 1]

|  | Inner-race conformity | Outer-race conformity |
| --- | --- | --- |
| Conventional wave bearing | 51.1%~52.3% | 51.5%~52.5% |

(continued)

|  | Inner-race conformity | Outer-race conformity |
|---|---|---|
| Wave bearing of this example | 51.1%~52.3% | 52.6%~58.1% |

According to experiments conducted by the present inventors et al, it was confirmed that the friction torque of the wave bearing 7 can be reduced while maintaining the practical service life thereof to be the same level as in a conventional one by setting the outer-race conformity to be a value within the above-mentioned range.

(Another embodiments)

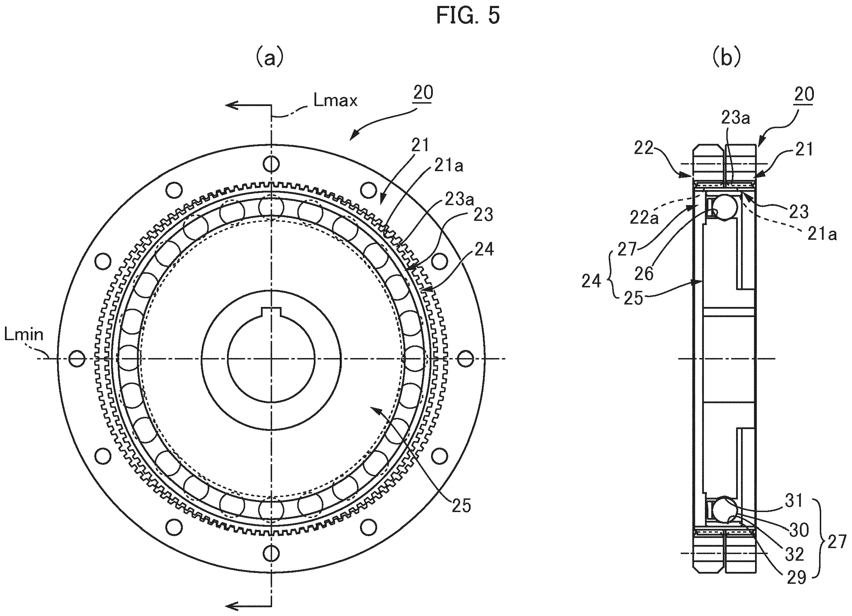

FIG. 5 illustrates an example of a flat-type strain wave gearing to which the present invention is applied, in which FIG. 5(a) is a schematic end view illustrating a flat-type strain wave gearing and FIG. 5(b) is a schematic longitudinal cross-sectional view thereof.

A strain wave gearing 20 is provided with a rigid internally toothed gear having a first internally toothed gear 21 and a second internally toothed gear 22. The first and second internally toothed gears 21 and 22 are coaxially disposed in parallel, and a cylindrical flexible externally toothed gear 23 is disposed inside these internally toothed gears. A wave generator 24 having an elliptical contour is fitted into the externally toothed gear 23. The externally toothed gear 23 is flexed into an elliptical shape by the wave generator 24 so that the external teeth 23a thereof are meshed with both the inner teeth 21a of the first internally toothed gear 21 and the internal teeth 22a of the second internally toothed gear 22 on both ends of the major axis Lmax of the elliptical shape. For example, the number of teeth of the first internally toothed gear 21 is 2n (n is a positive integer) greater than the number of teeth of the second internally toothed gear 22, and the number of teeth of the externally toothed gear 23 is the same as that of the second internally toothed gear 22. The external teeth 23a mesh with the internal teeth 21a and 22a on positions of the major axis Lmax of the elliptical shape of the externally toothed gear 23.

The wave generator 24 is provided with a rigid plug 25 and a wave bearing 27 mounted on the elliptical outer circumferential surface 26. The wave bearing 27 is provided with an inner-race raceway-surface 31 formed on the elliptical outer circumferential surface of the rigid plug 25, a circular outer race 29 that is flexible in the radial direction, and a plurality of balls 30. The balls 30 are mounted in a rollable state between the inner-race raceway surface 31 and an outer-race raceway surface 32 formed on the inner circumferential surface of the outer race 29.

The wave bearing 27 is flexed into an elliptical shape by the rigid plug 25 and, in this state, is fitted into the externally toothed gear 23. The wave bearing 27 holds the externally toothed gear 23 and the rigid plug linked to a high-speed rotation input shaft in a relatively rotatable state. The balls 30, which are inserted between the inner-race raceway surface 31 and the outer-race raceway surface 32, perform a rolling motion along these surfaces, which allows the rigid plug 25 and the externally toothed gear 23 can be rotated relative to each other with a small torque.

In this example as well, the wave bearing 27 has a basic structure that is the same as in a wave bearing of a deep-groove-bearing type but has the outer-race conformity larger than the inner-race conformity. For example, the inner-race conformity is set to be a value within a range from 51.1% to 52.3% and the outer-race conformity is set to be a value within a range from 52.6% to 58.1%.

**Claims**

1. A wave generator of a strain wave gearing, in which the wave generator is configured to flex a flexible externally toothed gear into an elliptical shape, partially mesh with an internally toothed gear and move meshing positions between the both gears in a circumferential direction, the wave generator comprising:

   a rigid plug and a wave bearing,
   wherein the wave bearing is provided with an annular outer race that is flexible in a radial direction thereof, an annular inner race that is flexible in a radial direction thereof, and a plurality of balls inserted between the outer race and the inner race;
   the wave bearing is mounted on an elliptical outer circumferential surface of the rigid plug, and the outer race and the inner race are flexed into an elliptical shape; and
   where D is a ball diameter of the balls, Ro is a raceway-surface radius of the outer race, Ri is a raceway-surface radius of the inner race Ro/D is an outer-race conformity, and Ri/D is an inner-race conformity,
   the outer-race conformity Ro/D is greater than the inner-race conformity Ri/D.

2. A wave generator of a strain wave gearing, in which the wave generator is configured to flex a flexible externally toothed gear into an elliptical shape, partially mesh with an internally toothed gear and move meshing positions between the both gears in a circumferential direction, the wave generator comprising:

a rigid plug and a wave bearing,
wherein the wave bearing is provided with an annular outer race that is flexible in a radial direction thereof, an inner-race raceway surface formed on an elliptical outer circumferential surface of the rigid plug, and a plurality of balls inserted between the inner-race raceway surface and an outer-race raceway surface formed on an inner circumferential surface of the outer race;
the outer race is flexed into an elliptical shape in accordance with the elliptical outer circumferential surface; and
where D is a ball diameter of the balls, Ro is a raceway-surface radius of the outer race, Ri is a raceway-surface radius of the inner race Ro/D is an outer-race conformity, and Ri/D is an inner-race conformity,
the outer-race conformity Ro/D is greater than the inner-race conformity Ri/D.

3. The wave generator of the strain wave gearing according to claim 1 or 2,
wherein the outer-race conformity is in a range from 52.6% to 58.1%, and
the inner-race conformity is in a range from 51.1% to 52.3%.

4. A strain wave gearing comprising:
the wave generator as set forth in any one of claims 1, 2 and 3.

FIG. 1

FIG. 2

## FIG. 3

FIG. 4

# FIG. 5

(a)

(b)

EP 3 702 642 A1

## INTERNATIONAL SEARCH REPORT

| | International application No. |
|---|---|
| | PCT/JP2017/032380 |

**A. CLASSIFICATION OF SUBJECT MATTER**

*F16H1/32*(2006.01)i, *F16C33/58*(2006.01)i

According to International Patent Classification (IPC) or to both national classification and IPC

**B. FIELDS SEARCHED**

Minimum documentation searched (classification system followed by classification symbols)
F16H1/32, F16C33/58

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-164068 A (Harmonic Drive Systems Inc.), 29 July 2010 (29.07.2010), paragraphs [0014] to [0019]; fig. 1 to 2 & US 2010/0175503 A1 paragraphs [0027] to [0032]; fig. 1 to 2 & US 2013/0079190 A1    & DE 102010004286 A1 | 1-4 |
| A | JP 2004-232683 A (Koyo Seiko Co., Ltd.), 19 August 2004 (19.08.2004), entire text; all drawings (Family: none) | 1-4 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 October 2017 (12.10.17) | 24 October 2017 (24.10.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5172195 A
- JP 8166052 A
- WO 0291238 A
- JP 2010164068 A